# EUROPEAN PATENT APPLICATION

(11) **EP 3 501 447 A1**
(43) Date of publication of application: **26.06.2019**
(21) Application number: 17209482.3
(22) Date of filing: 21.12.2017
(51) Int. Cl.: A61C 8/00

(54) **IMPLANT DRIVER**

(71) Applicant: Dentsply IH AB, 431 21 Mölndal (SE)
(72) Inventor: Marklund, Mattias, 411 35 GÖTEBORG (SE)
(74) Representative: AWA Sweden AB

(57) **Abstract**

The present invention relates to an implant driver comprising a driving part (2) having a central axis (20). The driving part (2) comprises at least two driving splines (21) extending radially outwards from the driving part (2) for engagement with a dental implant (5) for transferring a rotational force from the implant driver (1) to the implant (5). The driving part (2) further comprises at least two clamping splines (22) extending radially outwards from the driving part (2) to achieve a clamping function. The at least two driving splines (21) and the at least two clamping splines (22) have different dimensions. Additionally, the present invention also relates to an implant system comprising such an implant driver and a dental implant.

## Description

### FIELD OF THE INVENTION

The present invention relates to an implant driver for picking up, carrying and installing an implant, particularly for installing a dental implant in a jaw bone. The invention also relates to an implant system comprising such an implant driver and a dental implant.

### BACKGROUND OF THE INVENTION

A damaged limb, such as a lost tooth, is often restored by an implant. The implant is installed in the adjacent bone tissue, and a prosthesis is fixed to the implant. A dental implant is normally anchored in a hole drilled in the jawbone. The implant can either be fitted in an already threaded hole, or it can be of a self-tapping type. Whichever type is used, the implant is screwed down into the hole, using an implant driver. The implant driver is usually dimensioned so that a driving part of it can engage with a socket in the implant, allowing a rotational force to be transferred from the implant driver to the implant. Many implant drivers also have a guide pin, extending apically of the driving part. The guide pin is used to guide the driver when it is being inserted in the implant, so that it is inserted in a correct position. The guide pin can also be used to take up excessive load put on the implant driver, to protect the implant.

Today, a separate implant pick-up is sometimes used to pick the implant up from its packaging and carry it to the installation site. Sometimes the implant driver itself is used for picking up the implant, but there is a need for a more safe, predictable and easy way of picking up and carrying the implant to the implant site.

### SUMMARY OF THE INVENTION

It is an object of the present invention to provide an improved implant driver for picking up a dental implant, carrying it to an installation site, and installing the implant. This and other objects, which will become apparent in the following, are accomplished by an implant driver and an implant system as defined in the accompanying independent claims.

The present invention is at least partly based on the realisation that by providing clamping splines on the driving part of an implant driver, a clamping effect may be achieved when the implant driver is inserted into the socket of an implant. This clamping effect will allow the implant driver to hold the implant, so that it may be safely picked up and carried to the installation site. By providing separate clamping splines, instead of using the driving splines used for transferring a rotational force to the implant as clamping splines, the driving effect is not compromised.

The term exemplary should in this application be understood as serving as an example, instance or illustration.

According to a first aspect of the present inventive concept, an implant driver is provided. The implant driver comprises:
- a driving part having a central axis, said driving part comprising
- at least two driving splines extending radially outwards from the driving part for engagement with a dental implant for transferring a rotational force from the implant driver to the implant, and
- at least two clamping splines extending radially outwards from the driving part to achieve a clamping function,
wherein the at least two driving splines and the at least two clamping splines have different dimensions.

By providing clamping splines having different dimensions than the driving splines of the driving portion, it is possible to achieve a clamping function without having to compromise with the driving properties of the implant driver. The clamping function may be achieved by the clamping splines elastically deforming the dental implant.

The implant driver may be made in one piece, or it may be made in a plurality of pieces that are connected to each other. The implant driver may suitably be made from a metallic material, such as stainless steel.

The implant driver may in some exemplary embodiments comprise a handle part, extending coronally of the driving part. The handle part may be adapted to be connected to a torque wrench, which may be used when the implant is installed in the bone. A rotational force may then be applied to the torque wrench and transferred from the torque wrench to the handle part of the implant driver. From the handle part of the implant driver the rotational force may then be transferred to the driving part, and from the driving splines of the driving part it may be transferred to the dental implant.

The driving part of the implant driver may in some embodiments be cylindrical, with the at least two driving splines and the at least two clamping splines extending radially outwards from the circumferential surface of the cylinder. Other shapes of the driving part are also conceivable, such as hexagonal, cone shaped, cuboid, etc. The shape of the driving part is suitably adapted to the shape of the socket of the dental implant that the driver is to be used with.

The at least two driving splines may suitably have a rectangular cross-section perpendicular to the central axis of the driving part. Other types of cross-sections are also conceivable, such as triangular, semi-circular, etc. The at least two driving splines may extend along the whole axial extension of the driving part, or they may extend only along a portion of the axial extension of the driving part.

The at least two clamping splines may suitably have a rectangular cross-section perpendicular to the central axis of the driving part. The size of said cross-section may differ along the axial extension of the clamping splines. Other types of cross-sections are also conceivable for the clamping splines, such as triangular, semi-circular, etc. The at least two clamping splines may extend at an angle from the central axis of the driving part. They may further extend along the whole axial extension of the driving part, or they may extend only along a portion of the axial extension of the driving part.

The cross-section of the at least two driving splines and the cross-section of the at least two clamping splines may have the same shape, or they may have different shapes.

According to at least one exemplary embodiment of the first aspect of the present inventive concept, said at least two clamping splines are tapered in relation to said central axis. In other words, the distance from a peripheral surface of the at least two clamping splines to said central axis varies along the axial extension of the at least two clamping splines. This is advantageous since it allows for a variation of the clamping effect. It may further enable that clamping splines of the same type and size may be used with implants of different types and/or sizes. Further, having tapered clamping splines enables them to be wedged into an implant.

According to at least one exemplary embodiment of the first aspect of the present inventive concept, said at least two driving splines are parallel in relation to said central axis. This is advantageous if the implant driver is used with an implant having a socket with a circumferential wall which is parallel to said central axis when said implant driver is inserted into the socket. The driving splines may then be parallel to the circumferential wall of the socket, which may improve the transfer of a rotational force from the implant driver to the implant.

According to at least one exemplary embodiment of the first aspect of the present inventive concept, said at least two driving splines extend further radially outwards from the driving part than the at least two clamping splines. This enables the driving splines to reach into indentations in an indexed socket of e.g. a dental implant, while the clamping splines do not reach into the indentations. This prevents the driver from being incorrectly inserted into an implant.

According to at least one exemplary embodiment of the first aspect of the present inventive concept, said at least two clamping splines have a coronal portion each which extends further radially outwards from said driving portion than a respective apical portion of said at least two clamping splines. In other words, the at least two clamping splines taper in an apical direction. This is advantageous since it allows for the driving portion of the implant driver to be at least partially inserted into the socket of the dental implant, such that the at least two driving splines may engage with the socket, before the clamping effect of the clamping splines is achieved.

The term "coronal" is here and throughout this application used to indicate a direction towards a head end or trailing end of the implant driver. For instance, in a situation where the implant driver is inserted into the socket of a dental implant, and the dental implant is inserted into bore hole in a bone, the coronal direction of the implant driver would be a direction away from the bone. Conversely, the term "apical" indicates a direction towards an insertion or leading end of the component. Thus, apical and coronal are opposite directions. Furthermore, the terms "axial", "axial direction" or "axially" are used throughout this application to indicate a direction taken from the coronal end to the apical end, or vice versa. The terms "radial", "radial direction" or "radially" indicate a direction perpendicular to the axial direction.

According to at least one exemplary embodiment of the first aspect of the present inventive concept, said at least two driving splines and said at least two clamping splines are arranged alternatingly around the circumferential extension of the driving part. In other words, each one of the driving splines is neighboured by one clamping spline in each circumferential direction. This is advantageous since it is desirable to have both the clamping splines and the driving splines arranged symmetrically around the circumferential extension of the driving part, in order to achieve both an efficient clamping function as well as an efficient transfer of the rotational force.

According to at least one exemplary embodiment of the first aspect of the present inventive concept, the implant driver further comprises a guide pin part extending apically of the driving part. The guide pin part may in some embodiments be cylindrical. An advantage of having a guide pin part is that it may guide the implant driver when it is being inserted in the implant, so that it is inserted in a correct position.

According to a second aspect of the present inventive concept, an implant system is provided, comprising:
- a dental implant having a socket, said socket being defined by a circumferential wall having at least two indentations, and
- an implant driver comprising a driving part having a central axis, said driving part comprising
- at least two driving splines extending radially outwards from the driving part for engagement with the dental implant for transferring a rotational force from the implant driver to the implant, and
- at least two clamping splines extending radially outwards from the driving part for elastically deforming the dental implant, to achieve a clamping function,
wherein the at least two driving splines of said implant driver are adapted to fit in the at least two indentations of the socket of the dental implant when said implant driver is inserted into said socket, and
wherein the at least two clamping splines are adapted to be in contact with the circumferential wall of the socket of the dental implant when said implant driver is inserted into said socket.

The dental implant may be any dental implant of conventional type, having a socket with at least two indentations. The socket may suitably be cylindrical, with the indentations extending radially outwards from the circumferential wall. Other shapes of the socket are also conceivable, such as cuboid or cone shaped. If the at least two indentations, the at least two driving splines and the at least two clamping splines are disregarded, the socket of the dental implant and the driving part of the implant driver may suitably have the same shape.

The effects and features of the implant driver may be the same as those described in relation to the implant driver of the first aspect of the present inventive concept. These will therefore not be repeated here.

It should be understood that the at least two driving splines being adapted to fit in the at least two indentations means that the driving part of the implant driver may be inserted into the socket of the dental implant, such that the at least two driving splines are at least partially enclosed by wall portions defining the at least two indentations. The number of indentations in the socket of the dental implant is suitably at least as high as the number of driving splines on the driving part of the implant driver.

That the at least two clamping splines are adapted to be in contact with the circumferential wall of the socket when the implant driver is inserted into the socket should be interpreted to mean that it is possible to insert the driving portion of the implant driver at least partly into the socket of the dental implant, such that at least a portion of the clamping splines are in contact with the circumferential wall of the socket. The clamping function is achieved by inserting the driving portion further when the clamping splines are in contact, such that portions of the circumferential wall of the socket are slightly elastically deformed. This elastic deformation causes the implant to exert a small pressure towards the clamping splines of the implant driver, which causes a frictional force between the implant driver and the dental implant. This frictional force enables the clamping function, such that the dental implant may be picked up and carried using the implant driver. In order to achieve an elastic deformation of the implant, a coronal portion of the clamping splines may be arranged at a larger radial distance from the central axis of the driving part than the corresponding receiving part of the socket does when the driving part is inserted into the socket.

According to at least one exemplary embodiment of the second aspect of the present inventive concept, only a coronal portion of said at least two clamping splines is adapted to be in contact with the circumferential wall of the socket of the dental implant. This is advantageous since it enables that the driving portion of the implant driver is at least partially inserted into the socket of the dental implant when the clamping function is achieved. This is desirable since it allows for having a clamping function without obstructing the transferring of a rotational force from the implant driver to the implant, via the at least two driving splines.

According to at least one exemplary embodiment of the second aspect of the present inventive concept, the implant driver is an implant driver according to the first aspect of the present inventive concept. Effects and features of this are largely analogous to those described above in connection with the first aspect of the present inventive concept, and will therefore not be repeated here. Embodiments mentioned in relation to the first aspect of the present invention are largely compatible with the second aspect of the present invention.

A third, a fourth and a fifth alternative aspect of the present invention are provided below. These aspects are at least partially based on the realisation that a lock function can be created between the implant and the implant driver by giving the implant driver a non-rotation symmetric geometry. Using a non-rotation symmetric geometry, two connection areas that interact and create a clamping function can be created between the implant and the implant driver.

According to a third alternative aspect of the present inventive concept, an implant driver is provided. The implant driver comprises a driving part having a central axis, said driving part being adapted for engagement with a dental implant for transferring a rotational force from the implant driver to the implant. The implant driver further comprises a guide pin part extending apically of the driving part, wherein an apical portion of the guide pin part has a cross-section perpendicular to said central axis, said cross-section extends a first radial distance from the central axis in a first radial direction, and extends a second radial distance from the central axis in a second radial direction being diametrically opposite to said first radial direction. The first radial distance is longer than the second radial distance.

Similarly to the first aspect of the present invention, the implant driver according to the third aspect may be made in one piece, or it may be made in a plurality of pieces that are connected to each other. The implant driver may suitably be made from a metallic material, such as stainless steel.

The implant driver may in some exemplary embodiments comprise a handle part, extending coronally of the driving part. The handle part may be adapted to be connected to a torque wrench, which may be used when the implant is installed in the bone. A rotational force may then be applied to the torque wrench and transferred from the torque wrench to the handle part of the implant driver. From the handle part of the implant driver the rotational force may then be transferred to the driving part, and from the driving part it may be transferred to the dental implant. The driving part may suitably comprise driving splines in accordance with what is described in relation to the first aspect of the present invention.

The guide pin part of the implant driver may in some embodiments have a circular cross-section. Other shapes of the cross-section are also conceivable. The guide pin part may suitably have a smaller cross-section than the driving part of the implant driver.

According to at least one exemplary embodiment of the third aspect of the present inventive concept, said guide pin part has a coronal portion having a cross-section perpendicular to said central axis, wherein said cross-section of the coronal portion extends a shorter radial distance from the central axis in said first radial direction than said first radial distance. This is advantageous to ensure that the implant driver may be fully inserted into the dental implant.

According to at least one exemplary embodiment of the third aspect of the present inventive concept, at least said apical portion of the guide pin part is inclined in relation to said central axis. This inclination ensures that it is possible to insert the implant driver into a dental implant such that only a portion of the guide pin part is in contact with the implant.

According to at least one exemplary embodiment of the third aspect of the present inventive concept, said apical portion comprises a peripheral surface, said first radial distance extending from the central axis to said peripheral surface, said peripheral surface being parallel with said central axis. This allows for using the implant driver with a dental implant having a socket which is parallel to the central axis.

According to at least one exemplary embodiment of the third aspect of the present inventive concept, the shape of the guide pin part is formed by bending and turning, or by machining. These methods are suitable for achieving a desired shape of the guide pin part.

According to a fourth alternative aspect of the present inventive concept, an implant system comprising an implant driver according to the third aspect of the present inventive concept is provided. The implant system further comprises a dental implant, said dental implant having a socket, wherein at least a part of said socket has a thread. The guide pin part is dimensioned and shaped so that when the implant driver has been inserted into the socket, a portion of the guide pin part is in contact with said thread, creating a first contact area, said first contact area being located diametrically opposite, in relation to the central axis, to an area of the guide pin part which is not in contact with the implant.

The first contact area between the guide pin part and the thread of the socket enables that the implant driver may be used to pick up and carry the dental implant, due to the friction created. By having an area of the guide pin part which is not in contact with the implant diametrically opposite of the first contact area, the guide pin part may be fully inserted into the socket without having to force it down and risk damaging the thread.

According to at least one exemplary embodiment of the fourth aspect of the present inventive concept, there is a second contact area between the implant driver and the implant, wherein the first and second contact areas are located so that a locking function is achieved between the implant driver and the implant. Having a locking function using a second contact area further enhances the implant driver's ability to carry the dental implant.

According to at least one exemplary embodiment of the fourth aspect of the present inventive concept, said second contact area is located coronally and diametrically opposite of the first contact area, in relation to the central axis. By arranging the second contact area accordingly, the locking effect may be improved further.

According to at least one exemplary embodiment of the fourth aspect of the present inventive concept, said second contact area is located at a part of the implant driver other than the guide pin part, such as at a conical part coronally of the driving part. In other embodiments, the second contact area may for example be located at the driving part. By arranging the second contact are at a part of the implant driver other than the guide pin part, the axial distance between the first contact area and the second contact area is increased, which will result in an improved locking function.

According to at least one exemplary embodiment of the fourth aspect of the present inventive concept, said thread has a pitch, and said first contact area has an axial extension corresponding to at least said pitch. This is advantageous to prevent that the guide pin part is inserted into the socket such that the first contact area is arranged between two threads, which would reduce the efficiency of the locking function.

Other effects and features of the fourth aspect of the present invention are largely analogous to those described above in connection with the third aspect of the present inventive concept, and will therefore not be repeated here. Embodiments mentioned in relation to the third aspect of the present invention are largely compatible with the fourth aspect of the present invention.

According to a fifth alternative aspect of the present inventive concept, a method for producing an implant driver according to the third aspect of the present inventive concept is provided. The method comprises bending the guide pin part, and then turning or machining the apical portion, or forming the apical portion of the guide pin part over-dimensioned in relation to the desired final dimensions, and then machining the apical portion to its final dimension. These methods of producing an implant driver are suitable for producing an implant driver according to the third aspect of the present invention.

### BRIEF DESCRIPTION OF THE DRAWINGS

These and other aspects and features of the present inventive concept will in the following be described in more detail, with reference to the appended drawings showing different embodiments of the various aspects of the inventive concept.
Fig. 1 a is a perspective view of an exemplary embodiment of an implant driver according to the first aspect of the present invention.
Fig. 1b is an enlarged perspective view of a portion of the implant driver illustrated in Fig. 1 a.
Fig. 2 is a partly sectioned perspective view of an exemplary embodiment of an implant system according to the second aspect of the present invention.
Fig. 3a and Fig. 3b are section views of the implant system illustrated in Fig. 2.
Fig. 4a and Fig. 4b are also section views of the implant system illustrated in Fig. 2.
Fig. 5 is a section view of an exemplary embodiment of an implant system according to the fourth aspect of the present invention.
Fig. 6a and Fig. 6b are side views of an exemplary embodiment of an implant driver according to the third aspect of the present invention.
Fig. 7a and Fig. 7b are side views of another exemplary embodiment of an implant driver according to the third aspect of the present invention.

### DETAILED DESCRIPTION OF EMBODIMENTS

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

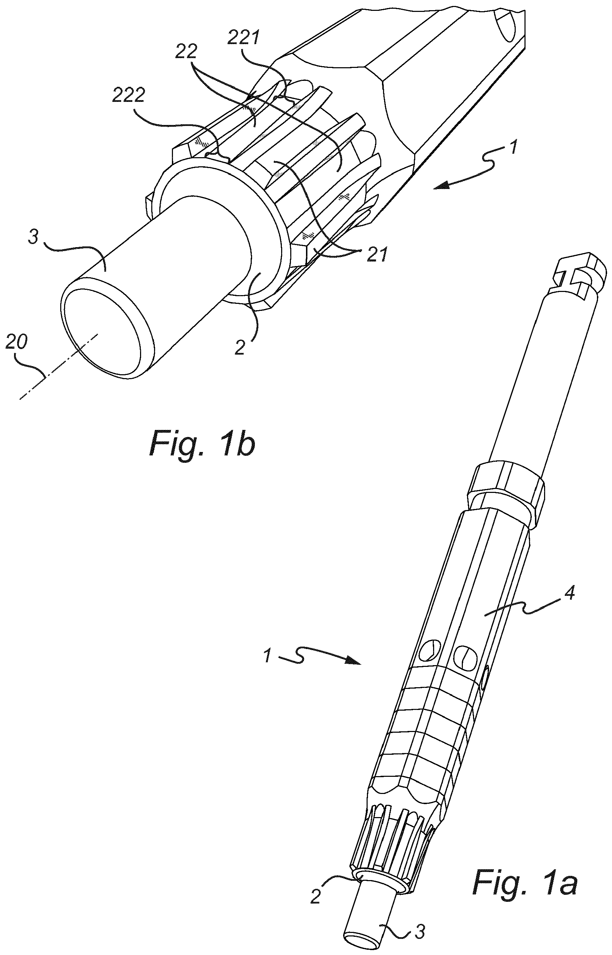

Fig. 1 a illustrates an exemplary embodiment of an implant driver 1 according to the first aspect of the present invention. This exemplary implant driver 1 comprises a driving part 2 having a central axis 20, a guide pin part 3 extending apically of the driving part 2, and a handle part 4 extending coronally of the driving part 2. The driving part 2 is shown in more detail in Fig. 1 b. The handle part 4 is in this embodiment hexagonal. The guide pin part 3 is cylindrical. As the handle part 4 and the guide pin part 3 are not essential parts of this first aspect of the present inventive concept, and may be of the same type as those of a conventional implant driver, they will not be described in further detail here.

As can be seen in Fig. 1b, the driving part 2 of the implant driver 1 is in this embodiment cylindrical, with at least two driving splines 21 and at least two clamping splines 22 extending radially outwards from the driving part 2. In this exemplary embodiment, the driving part 2 has six driving splines 21, for engagement with a dental implant for transferring a rotational force from the implant driver 1 to the implant. The implant driver 1 also has six clamping splines 22 to achieve a clamping function. The number of driving splines 21 and clamping splines 22 may vary between embodiments, and the number of clamping splines 22 does not have to be the same as the number of driving splines 21.

The driving splines 21 and the clamping splines 22 have different dimensions. In the illustrated exemplary embodiment, the driving splines 21 and the clamping splines 22 have the same width in a circumferential direction, and the same length in an axial direction. The dimensions differ in that the driving splines 21 extend further radially outwards from the driving part 2 than the clamping splines 22. Further, in this exemplary embodiment, the driving splines 21 are parallel in relation to the central axis 20, while the clamping splines 22 are tapered in relation to the central axis 20. The clamping splines 22 taper in an apical direction, such that a coronal portion 221 of each clamping spline 22 extends further radially outwards from the driving portion 2 than a respective apical portion 222 of the same clamping spline 22. In this exemplary embodiment, the clamping splines 22 are linearly tapered. In other words, the clamping splines 22 extend at an angle in relation to the central axis 20 of the driving part. In other embodiments, the clamping splines 22 may for example be curved along their axial extension, in relation to the central axis 20.

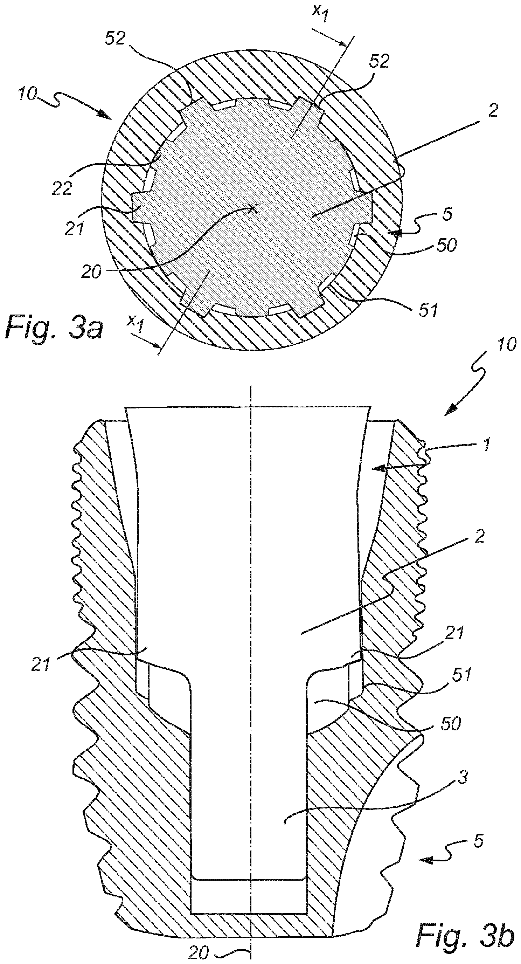

The driving splines 21 and the clamping splines 22 are in the illustrated exemplary embodiment arranged alternatingly around the circumferential extension of the driving part. This is further clarified in relation to Fig. 3a.

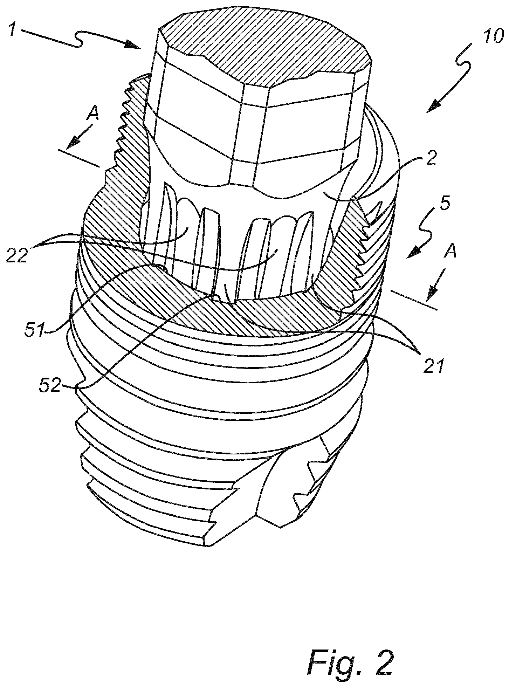

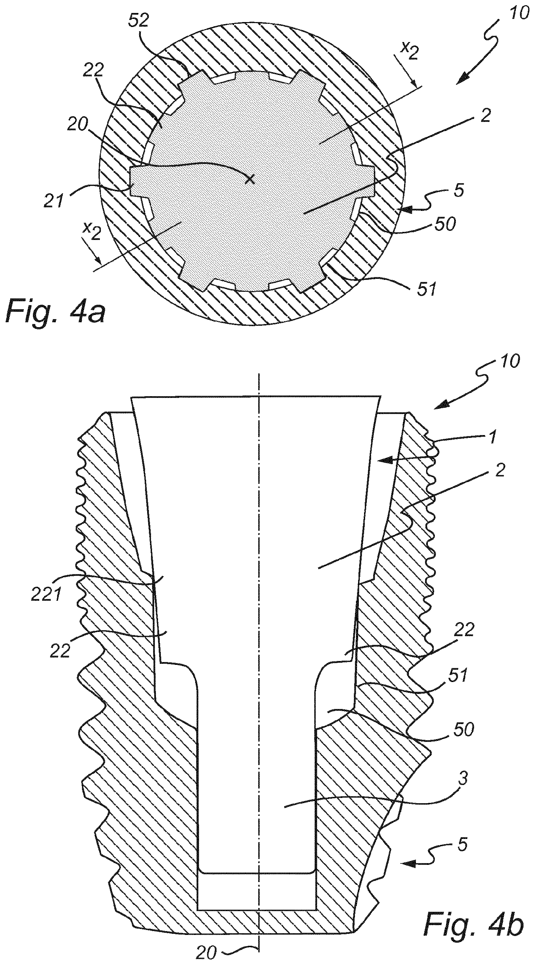

In Fig. 2, an implant system 10 according to the second aspect of the present invention is illustrated. The implant system 10 comprises a dental implant 5 and an implant driver 1. The implant driver 1 in this exemplary embodiment may be the same as the implant driver 1 illustrated and described in relation to Fig. 1 a and 1 b, i.e. an implant driver 1 according to the first aspect of the present invention. The implant driver 1 itself will therefore not be described further on its own, but rather in relation to the dental implant 5. The dental implant 5 has a socket 50 (see Fig. 3a, 3b, 4a and 4b), which is defined by a circumferential wall 51 having at least two indentations 52. In this exemplary embodiment, the circumferential wall 51 of the socket 50 has six indentations 52. The number of the indentations 52 is suitably at least as high as the number of driving splines 21 of the implant driver 1, which in this embodiment is six. When the implant driver 1 is inserted into the socket 50, the driving splines 21 of the implant driver 1 are adapted to fit in the indentations 52 of the socket 50, and the clamping splines 22 are adapted to be in contact with the circumferential wall 51 of the socket 50. The interface between the driving splines 21 and the indentations 52 of the socket 50 allows for a rotational force to be transferred from the implant driver 1 to the implant 5, such that the implant 5 may e.g. be installed in a bone. The contact between the clamping splines 22 and the circumferential wall 51 of the socket 50 of the dental implant 5 allows for the clamping splines 22 to elastically deform the dental implant 5 to achieve a clamping function, e.g. such that the implant driver 1 may be used to pick up and carry the implant 5 to its installation site.

The line A-A in Fig. 2 indicates the sectioning for the cross-sections shown in Fig. 3a and Fig. 4a.

Fig. 3a, Fig. 3b, Fig. 4a and Fig. 4b all show cross-sections of the implant system 10 illustrated in Fig. 2. Fig. 3a and Fig. 4a are identical, with different section lines indicating how Fig. 3b and Fig. 4b respectively are sectioned.

In Fig. 3a and Fig. 4a, it is shown how the driving splines 21 and the clamping splines 22 are arranged alternatingly around the circumferential extension of the driving part 2 of the implant driver 1. It is also shown how the driving splines 21 are arranged in the indentations 52 of the socket 50 of the implant 5, and how the clamping splines 22 are in contact with the circumferential wall 51 of the socket 50. The line X1-X1 indicates which cross-section of the implant system 10 is shown in Fig. 3b.

In Fig. 3b, the implant system 10 from Fig. 2 and Fig. 3a is illustrated, with the driving part 2 of the implant driver 1 inserted into the socket 50 of the dental implant 5. The guide pin part 3 extends apically of the driving part 2, in this embodiment into a narrower portion of the socket 50. As this cross-section is taken along the line X1-X1 from Fig. 3a, the implant system 10 is sectioned across the axial extension of the driving splines 21. In this embodiment, the driving splines 21 extend parallel to the central axis 20 of the driving part 2. They also extend parallel to the circumferential wall 51 of the socket 50 of the dental implant 5. In other embodiments, the driving splines 21 may not extend parallel to the central axis 20 of the driving part 2, but may suitably still extend parallel to the circumferential wall 51 of the socket 50. In this embodiment, the driving splines 21 are arranged in close proximity to the circumferential wall 51 of the socket 50. In other embodiments, there may be a wider gap between the driving splines 21 and the circumferential wall 51.

In Fig. 4a, the line X2-X2 indicates which cross-section of the implant system 10 is shown in Fig. 4b. In Fig. 4b, the implant system 10 from Fig. 2 and Fig. 3a and 3b is illustrated, also with the driving part 2 of the implant driver 1 inserted into the socket 50 of the dental implant 5. In contrast to Fig. 3b, the implant system 10 illustrated in Fig. 4b is sectioned across the axial extension of the clamping splines 22, i.e. along the line X2-X2. In this exemplary embodiment, only a coronal portion 221 of the clamping splines 22 is adapted to be in contact with the circumferential wall 51 of the socket 50 of the dental implant 5. This is achieved by the clamping splines 21 being tapered in an apical direction. In other words, the clamping splines 21 extend axially at an angle from the central axis 20 of the driving part, which results in that there is a tapered gap between the clamping splines 21 and the circumferential wall 51 of the socket 50, which gap closes at the coronal portion 221 of the clamping splines 22.

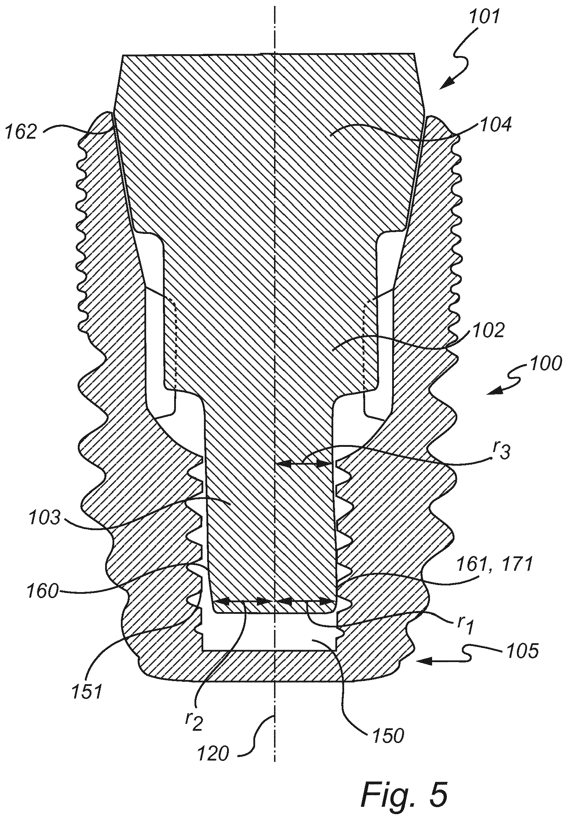

Fig. 5 shows a section view of an exemplary embodiment of an implant system 100 according to the fourth aspect of the present invention. The implant system 100 comprises an implant driver 101 and a dental implant 105. The dental implant 105 has a socket 150, wherein at least a part of the socket 150 has a thread 151. The thread 151 of the socket has a pitch.

The implant driver 101 comprises a driving part 102 which is adapted for engagement with the dental implant 105, for transferring a rotational force from the implant driver 101 to the implant 105, e.g. when the implant 105 is installed in a bone. The driving part 102 of the implant driver 101 has a central axis 120.

The implant driver 101 further comprises a guide pin part 103 extending apically of the driving part 102. An apical portion of the guide pin part 103 has a cross-section perpendicular to the central axis 120 of the driving part 102, which cross-section extends a first radial distance r₁ from the central axis 120 in a first radial direction, and extends a second radial distance r₂ from the central axis 120 in a second radial direction being diametrically opposite to the first radial direction. The first radial distance r₁ is longer than the second radial distance r₂. In other words, the guide pin part 103 is not rotationally symmetric. In this exemplary embodiment, the guide pin part 103 has a coronal portion having a cross-section perpendicular to the central axis 120, wherein this cross-section extends a shorter radial distance r₃ from the central axis 120 in the first radial direction than the first radial distance r₁.

The apical portion of the guide pin part 103 is in this exemplary embodiment inclined in relation to the central axis 120. Further, the apical portion comprises a peripheral surface 171, and the first radial distance r₁ extends from the central axis 120 to this peripheral surface 171. The peripheral surface 171 may be parallel with the central axis 120, as in the illustrated embodiment.

The guide pin part 103 is further dimensioned and shaped so that when the implant driver 101 has been inserted into the socket 150, as is illustrated in Fig. 5, a portion of the guide pin part 103 is in contact with the thread 151 of the socket 150. A first contact area 161 is created between the guide pin part 103 and the dental implant 105, which first contact area 161 is located diametrically opposite, in relation to the central axis 120, to an area 160 of the guide pin part 103 which is not in contact with the implant 105. In this exemplary embodiment, the first contact area 161 has an axial extension corresponding to at least the pitch of the thread 151 of the socket 150.

A second contact area 162 may be created between the implant driver 101 and the implant 105. The first 161 and second 162 contact areas may be located so that a locking function is achieved between the implant driver 101 and the implant 105. In this embodiment, the second contact area 162 is located coronally and diametrically opposite of the first contact area 161, in relation to the central axis 120. Here the second contact area 162 is located at a conical part 104 of the implant driver 101, coronally of the driving part 102. In other embodiments, a second contact area 162 may be located at other parts of the implant driver 101.

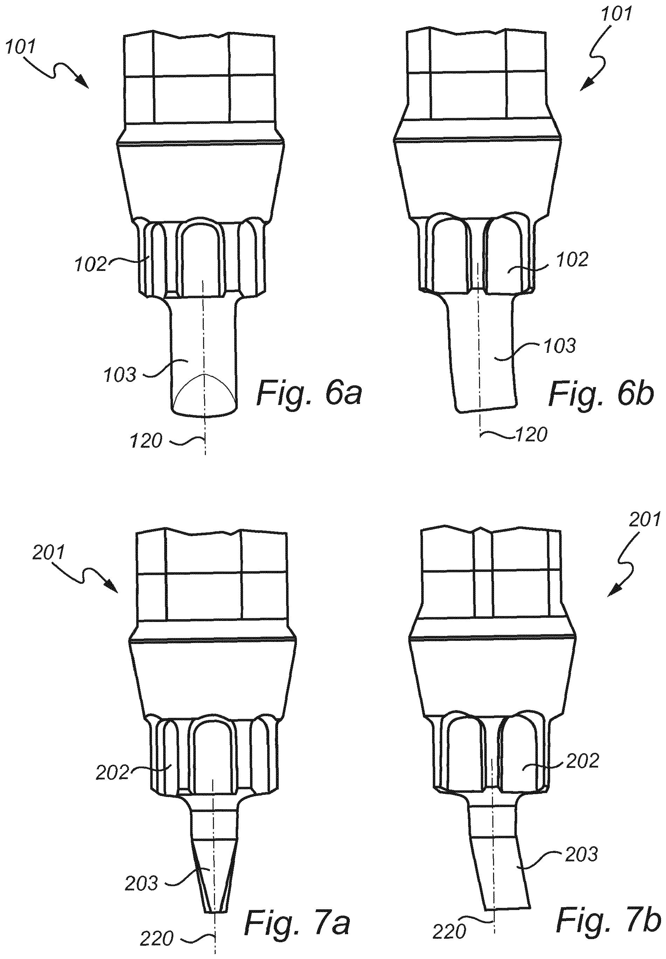

Fig. 6a and Fig. 6b are side views of an exemplary embodiment of an implant driver 101 according to the third aspect of the present invention. This implant driver 101 may be identical to the one illustrated as a part of the implant system 110 in Fig. 5, and will therefore not be described in further detail. The implant driver 101 may suitably be produced by a method according to the fifth aspect of the present inventive concept, wherein the guide pin part 103 is bent. The apical portion of the guide pin part 103 may then be machined and/or turned to the illustrated shape.

Fig. 7a and 7b are side views of another exemplary embodiment of an implant driver 201 according to the third aspect of the present invention. This embodiment may have the same features and effects as the implant driver 101 described in relation to Fig. 5 and Fig. 6a and 6b, with a driving part 202 having a central axis 220, and a guide pin part 203. The implant driver 201 according to this embodiment may however be manufactured in a different way. This implant driver 201 may suitably be manufactured by forming the apical portion of the guide pin part 203 over-dimensioned in relation to the final dimensions, and then machining the apical portion to its final dimensions.

The person skilled in the art realizes that the present invention by no means is limited to the embodiments described above. On the contrary, many modifications and variations are possible within the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. An implant driver (1) comprising:
- a driving part (2) having a central axis (20), said driving part (2) comprising
- at least two driving splines (21) extending radially outwards from the driving part (2) for engagement with a dental implant (5) for transferring a rotational force from the implant driver (1) to the implant (5), and
- at least two clamping splines (22) extending radially outwards from the driving part (2) to achieve a clamping function,
wherein the at least two driving splines (21) and the at least two clamping splines (22) have different dimensions.

2. An implant driver (1) according to claim 1, wherein said at least two clamping splines (22) are tapered in relation to said central axis (20).

3. An implant driver (1) according to any one of claims 1-2, wherein said at least two driving splines (21) are parallel in relation to said central axis (20).

4. An implant driver (1) according to any one of the preceding claims, wherein said at least two driving splines (21) extend further radially outwards from the driving part (2) than the at least two clamping splines (22).

5. An implant driver (1) according to any one of the preceding claims, wherein said at least two clamping splines (22) have a coronal portion (221) each which extends further radially outwards from said driving portion (2) than a respective apical portion (222) of said at least two clamping splines (22).

6. An implant driver (1) according to any one of the preceding claims, wherein said at least two driving splines (21) and said at least two clamping splines (22) are arranged alternatingly around the circumferential extension of the driving part (2).

7. An implant driver (1) according to any one of the preceding claims, further comprising a guide pin part (3) extending apically of the driving part (2).

8. An implant system (10) comprising:
- a dental implant (5) having a socket (50), said socket (50) being defined by a circumferential wall (51) having at least two indentations (52), and
- an implant driver (1) comprising a driving part (2) having a central axis (20), said driving part (20) comprising
- at least two driving splines (21) extending radially outwards from the driving part (2) for engagement with the dental implant (5) for transferring a rotational force from the implant driver (1) to the implant (5), and
- at least two clamping splines (22) extending radially outwards from the driving part (2) for elastically deforming the dental implant (5), to achieve a clamping function,
wherein the at least two driving splines (21) of said implant driver (1) are adapted to fit in the at least two indentations (52) of the socket (50) of the dental implant (5) when said implant driver (1) is inserted into said socket (50), and
wherein the at least two clamping splines (22) are adapted to be in contact with the circumferential wall (51) of the socket (50) of the dental implant (5) when said implant driver (1) is inserted into said socket (50).

9. An implant system (10) according to claim 8, wherein only a coronal portion (221) of said at least two clamping splines (22) is adapted to be in contact with the circumferential wall (51) of the socket (50) of the dental implant (5).

10. An implant system (10) according to any one of claims 8-9,
wherein the implant driver (1) is an implant driver according to any one of claims 1-7.
